# EUROPÄISCHE PATENTSCHRIFT

(11) **EP 1 675 806 B1**
(45) Veröffentlichungstag und Bekanntmachung des Hinweises auf die Patenterteilung: **12.09.2012**
(21) Anmeldenummer: 04790666.4
(22) Anmeldetag: 20.10.2004
(51) Int. Cl.: C03C 17/32

(54) **UV-HÄRTENDE GLASDRUCKFARBE UND UV-HÄRTENDER GLASDRUCKLACK SOWIE VERFAHREN ZUM BEDRUCKEN VON GLASSUBSTRATEN**
UV HARDENING GLASS PRINTING INK AND UV HARDENING GLASS PRINTING LACQUER AND METHOD FOR PRINTING A GLASS SUBSTRATE
ENCRE D'IMPRESSION SUR VERRE DURCISSABLE AU RAYONNEMENT UV ET LAQUE D'IMPRESSION SUR VERRE DURCISSABLE AU RAYONNEMENT UV, ET PROCEDE POUR IMPRIMER DES SUBSTRATS DE VERRE

(30) Priorität: 21.10.2003 DE 10349394
(43) Veröffentlichungstag der Anmeldung: 05.07.2006
(73) Patentinhaber: Marabu GmbH & Co. KG, 71732 Tamm (DE)
(72) Erfinder: LEHMANN, Saskia, 73252 Lenningen (DE); SCHÄFER, Wolfgang, 72160 Horb (DE)
(74) Vertreter: Wagner, Kilian
(86) Internationale Anmeldenummer: PCT/EP2004/011858
(87) Internationale Veröffentlichungsnummer: WO 2005/040055

(56) Entgegenhaltungen:
- DE-A1- 2 343 589
- GB-A- 1 159 404
- US-A- 5 656 336

## Beschreibung

Die Erfindung betrifft eine UV-härtende Glasdruckfarbe und einen UV-härtenden Glasdrucklack gemäß dem Oberbegriff von Anspruch 1, die Verwendung der UV-härtenden Glasdruckfarbe und des UV-härtenden Glasdrucklacks zum Bedrucken von Glassubstraten gemäß dem Oberbegriff von Anspruch 12 sowie ein Verfahren zum Bedrucken von Glassubstraten mit einer solchen Druckfarbe gemäß den Oberbegriffen der Ansprüche 14 und 15.

In jüngerer Zeit werden vermehrt UV-härtende organische Glasdruckfarben, die nach der Härtung mit Wärme nachbehandelt werden müssen, anstelle der früher verwendeten keramischen (anorganischen) Farben für das Bedrucken von Glas eingesetzt. Dies eröffnet die Möglichkeit, ohne Schwermetalle auszukommen, über eine größere Farbpalette (Standard- und Mischtöne) zu verfügen, eine größere Brillanz und einen erhöhten Glanzgrad zu erzielen. Ein weiterer Vorteil ist die Möglichkeit, den Farbton direkt nach der UV-Härtung zu beurteilen. Im Gegensatz dazu ist bei den anorganischen Farben die Beurteilung erst nach dem Einbrennen möglich. Weiter bieten sie Verfahrensvorteile, wie einen schnelleren Temperierungsprozeß (z.B. ca. 20 min gegenüber 90 min Temperierung) und eine verringerte Temperierungstemperatur (z.B. 160°C gegenüber 500-700°C), was die Verfahrenskosten gegenüber Verfahren mit anorganischen Glasdruckfarben verringert. Die organischen Glasdruckfarben selbst sind allerdings teurer als herkömmliche anorganische Farben zum Bedrucken von Glas.

Die milderen Verfahrensbedingungen beim Druckverfahren mit organischen Glasdruckfarben sorgen dafür, daß die Innendruckbeständigkeit von Flaschen nicht beeinträchtigt wird. Für das Bedrucken von Glas, das mit hohen Temperaturen nachbehandelt werden muß, wie verformtes Glas für Automobile oder Glas mit Hochglanz-Goldbedruckung, sind die organischen Glasdruckfarben allerdings nicht geeignet.

Bei den derzeitig verfügbaren organischen Druckfarben für Glas können die Deckkraft, die mechanische Beständigkeit und die Wasserbeständigkeit Probleme bereiten. Die organischen Druckfarben für Glas werden nach einer Glas-Vorbehandlung, z.B. durch Beflammung, in einem Zweikomponenten-Druckverfahren, d.h. mit einem in die Druckfarbe einzumischenden Haftvermittler, verdruckt und anschließend bei Temperaturen beispielsweise von 140 - 200°C über einen bestimmten Zeitraum nachgetempert.

Es wäre wünschenswert, dieses Druckverfahren zu vereinfachen und damit Kosten einzusparen. Eine Möglichkeit der Vereinfachung wäre die Beseitigung des Erfordernisses, zweikomponentig zu drucken, d.h. einen Haftvermittler zu verwenden. Eine weitere bestünde darin, ein Nachtempern überflüssig zu machen.

Die DE 2343589A1 offenbart Farben zum Markieren und Bedrucken von Glaswaren. Dabei werden Zweikomponentenfarben und Einkomponentenfarben in Betracht gezogen. Die einkomponentigen Druckfarben sind Lösungsmittelfarben, d. h. die Bildung und das Trocknen des Farbfilmes erfolgt durch Verdampfen eines leicht flüchtigen Lösungsmittels, wobei man den so erhaltenen Farbfilm durch eine längere Temperaturbehandlung noch weiter stabilisieren kann. Die zweikomponentigen Druckfarben entahlten in der Binderkomponente ein Epoxidharz, in der Härterkomponente ein Polyaminoamidharz. Die Trocknung oder Vernetzung erfolgt durch Wärme, z.B. IR-Strahlung.

Die WO 99/06336 offenbart ein Verfahren zum Bedrucken von Glas, in dem eine Glasfarbe, die ein Bisphenol A-Epoxidharz umfaßt, auf ein Glassubstrat gedruckt und dann mittels Strahlung gehärtet wird, wobei gegebenenfalls ein Haftvermittler verwendet wird.

Die Erfinderin hat jedoch gefunden, daß eine solche Glasdruckfarbe und ein solches Verfahren ohne weitere Maßnahmen keine ausreichende Haftung der Glasfarbe an dem Glassubstrat und keine ausreichende Kratzfestigkeit und Wasserbeständigkeit liefert. Demgemäß werden auch in allen Beispielen der WO 99/06336 sowohl ein Haftvermittler verwendet als auch ein Nachtempern bei einer Temperatur von 150°C bis 200°C vorgenommen. Die US 5 656 336 A offenbart ein ähnliches Verfahren, das auch an denselben Mängeln leidet.

Die Aufgabe der Erfindung besteht darin, eine Glasdruckfarbe und einen Glasdrucklack anzugeben, die eine ausreichende Haftfestigkeit und Kratzfestigkeit ohne Nachtempern gewährleisten. Ferner sollen eine Verwendung der Glasdruckfarbe und des Glasdrucklacks beim Bedrucken von Glassubstraten und ein dazugehöriges Druckverfahren angegeben werden.

Diese Aufgaben sind durch eine Glasdruckfarbe und einen Glasdrucklack gemäß Anspruch 1, durch eine Verwendung der Glasdruckfarbe und des Glasdrucklacks gemäß Anspruch 12 und durch ein Druckverfahren gemäß den Ansprüchen 14 und 15 gelöst

Ein wichtiger Vorteil der Erfindung ist neben den mechanischen Eigenschaften der gehärteten Farbschicht bzw. Lackschicht, dass eine Verfahrensvereinfachung dadurch erhalten wird, dass sowohl bei Einkomponenten-Systemen als auch bei Zweikomponenten-Systemen die gewünschten mechanischen Eigenschaften ohne Nachtempern erreicht werden. Außerdem wird in vielen Fällen eine gute Beständigkeit gegen Feuchtigkeit und Wasser erhalten.

Unter Glasdruckfarbe und Glasdrucklack werden eine Druckfarbe bzw, ein Drucklack verstanden, die sich zum Bedrucken von Glas und glasartigen Oberflächen, wie Keramik und Fliesen, eignen.

Die erfindungsgemäße Glasdruckfarbe und der erfindungsgemäße Glasdrucklack enthalten als einen Harzbestandteil ein Epoxidharz auf der Basis von Bisphenol A, das vorzugsweise ein Molekulargewicht im Bereich von 800 bis 1500 (Gewichtsmittel) aufweist. Derartige Epoxidharze sind im Handel erhältich. Besonders bevorzugte Beispiele sind Rütapox-Harz 0194 von Bakelite AG; ARALDITE^{®} GT 7072 von Vantico AG, K-401.1.32, CH-4002 Basel und Epikote 1055 von Brenntag.

Das erfindungsgemäß verwendete Epoxidharz wird in einem Monomer gelöst, welches UV-härtend ist, z.B. auf Grund von zur Polymerisation geeigneten Acrylatgruppen. Bevorzugt handelt es sich bei diesem Monomer um Mono-, Di- oder höhere Polyacrylate oder -methacrylate, wie beispielsweise Isobornylacrylat, 2-Phenylethylacrylat, 2-(2-Ethoxyethoxy)ethylacrylat (EOEOEA), 1,6-Hexandioldiacrylat (HDDA), Dipropylenglycoldiacrylat (DPGDA), Neopentylglycoldiacrylat, Dipentaerythrithexaacrylat (DPHA), propoxyliertes Glycerintriacrylat (GPTA), Tripropylenglycoldiacrylat, (TPGDA), Dipentaerythritpentaacrylat (DiPEPA), Pentaerythrittriacrylat (PETIA), ethoxyliertes Trimethylpropantriacrylat (TMPEOTA), Dipentaerythritacrylat (DPHA), Tricyclodecandimethanoldiacrylat (TCDDMDA), Hydroxypropylmethacrylat (HPMA). Ganz besonders bevorzugt ist 1,6-Hexandioldiacrylat.

Bevorzugt beträgt die Konzentration des Epoxidharzes in dem Monomer 10 bis 90 Gew.%, bevorzugt 30 bis 70 Gew.%, ganz besonders bevorzugt 50 Gew.%, bezogen auf die Mischung.

Die Konzentration des Epoxids in der erfindungsgemäßen Glasdruckfarbe und dem erfindungsgemäßen Glasdrucklack liegt im allgemeinen bei 1 bis 90 Gew.% Trockengewicht, bezogen auf die Gesamtmasse der Glasdruckfarbe oder des Glasdrucklacks, bevorzugt liegt sie bei 5 bis 20 Gew.%, besonders bevorzugt liegt sie bei 11 bis 14 Gew.% Trockengewicht.

Weiter enthalten die erfindungsgemäße Glasdruckfarbe und der erfindungsgemäße Glasdrucklack mindestens ein weiteres Harz, das freie funktionelle Amino-, Hydroxy-, Epoxid-, Säure-, Säureanhydrid- und/oder Acrylatgruppen aufweist. Als besonders geeignet haben sich Melaminacrylatharze (z.B. das Siliciumdioxid-verstärkte NANOCRYL XP 21/0793 von Hanse Chemie (hanse chemie GmbH, Charlottenburgerstrasse 9, D-21502 Geesthacht, Deutschland))oder das multifunktionelle Melaminacrylat ACTILANE 890 von Akzo Nobel Resins (Akzo Nobel Resins bv, Verkaufsbüro Deutschland, Industriestrasse 8, P.O. Box 100265, D-46422 Emmerich); Viaktin VTE 5967 von Surface Specialities UCB, Anderlechtstr. 33, B-1620 Drogenbos, und ein säuremodifiziertes Polyesteracrylat (z.B. GENOMER* 7154 der Firma Rahn, Dörflistrasse 120, Zürich, Schweiz; Ebecryl 770 von Surface Specialities UCB) erwiesen. Weitere geeignete Harze zur Kombination sind gewisse Polyesterharze (z.B.Roskydal UA XP 2416 von Bayer, Ebecryl 524 von Surface Specialities UCB) und Epoxyacrylate (z.B. Inchemrez UV 93IB50 von In Chem Corp, P.O.Box 69, CH 1170 Aubonne).

Die Menge dieses weiteren Harzes in der Glasdruckfarbe oder dem Glasdrucklack kann in großem Maß variieren. Im allgemeinen liegt die Menge bei 5 bis 90 Gew.% Trockengewicht, bezogen auf die Gesamtmasse der Glasdruckfarbe oder des Glasdrucklacks, bevorzugt bei 5 bis 40 Gew.%, besonders bevorzugt bei 10 bis 30 Gew.%. Dieses weitere Harz dient dazu, die Glasdruckfarbe oder den Glasdrucklack geschmeidiger und weniger spröde zu machen und dessen Haftung und Kratfestigkeit zu erhöhen.

Die erfindungsgemäße Glasdruckfarbe und der erfindungsgemäße Glasdrucklack können darüber hinaus gegebenenfalls noch zusätzliche Harze zur weiteren Verbesserung ihrer bzw. seiner Eigenschaften enthalten. Diese Harze können aus einer großen Vielfalt von Harzen ausgewählt sein, beispielsweise Methylmethacrylat-Colpolymeren (z.B Paraloid B-48N, Paraloid B60, Paraloid B-82 von Rohm & Haas Deutschland GmbH, In der Kron 4, D-60439 Frankfurt; Neocryl B-810 von Neoresins, Lurgiallee, D-60439 Frankfurt /Main); Ethylmethacrylat (z.B. Paraloid B 72 von Rohm & Haas); Butylmethacrylat-Copolymeren (z.B. Degalan LP 65/12, Degalan LP 68/04 von Röhm GmbH & Co. KG, Kirschenallee, D-64293 Darmstadt); flüssigen Epoxidharzen (z.B. Polypox E 064 von UPPC GmbH, Rütapox-Harz 0164 von Bakelite AG, Araldite GY 250 von Vantico); ungesättigten Polyesterharzen (z.B. Haftharz LTH von Degussa Chemiepark Marl, Paul-Baumann-Str. 1, D-45764 Marl); gesättigten Polyesterharzen (Dynapol L 912, Dynapol L 952 von Degussa)

Derartige zusätzliche Harze können beispielsweise in einer Menge von 1 bis 50 Gew.% Trockengewicht, bezogen auf die Gesamtmasse der Glasdruckfarbe oder des Glasdrucklacks, bevorzugt von 3 bis 10 Gew.% vorliegen.

Die erfindungsgemäße Glasfarbe und der erfindungsgemäße Glasdrucklack enthalten mindestens einen Photoinitiator, gewöhnlich zwei und möglicherweise drei oder mehr Photoinitiatoren, um die Oberflächen- und Tiefenhärtung (Vernetzung) der Glasfarbe im UV-Licht einzuleiten. Sie können aus den üblichen in UV-härtenden Druckfarben und -lacken usw. verwendeten Photoinitiatoren ausgewählt werden, beispielsweise, ohne darauf beschränkt zu sein, 1-Hydroxycyclohexylacetophenon (Irgacure^{®} 184 von Ciba SPEZIALTÄTEN-CHEMIE AG; Klybeckstraße 141, Postfach, CH-4002 Basel), 2-Methyl-1-[4-(methylthiophenyl)-2-morpholinopropan]-1-on (Irgacure^{®} 907 von Ciba), 2-Benzyl-2-dimethylamino-1-(4-morpholinophenyl)butan-1-on (Irgacure^{®} 369 von Ciba), Bis(2,4,6-trimethylbenzoyl)phenylphosphinoxid (Irgacure^{®} 819 von Ciba), 2-Hydroxy-2-methyl-1-phenyl-1-propanon (Darocur^{®} 1173 von Ciba), Isopropylthioxanthon (ITX von Lambson), 2-Chlorthioxanthon (CTX von Lambson), Benzophenon, 2,4,6-Trimethylbenzoldiphenylphosphinoxid (TPO von BASF), Ethyl-2,4,6-trimethylbenzoylphenylphosphinat (TPO-L von BASF) und Methylbenzoylformiat (MBF von Lambson). Die Gesamtmenge an Photoinitiatoren beträgt im allgemeinen 1 bis 12 Gew.%, bevorzugt 3 bis 7 Gew.%, bezogen auf die Gesamtmasse der Glasdruckfarbe oder des Glasdrucklacks.

Zusätzlich können auch Co-Initiatoren wie Amine (z.B. MDEA von BASF, BASF Aktiengesellschaft, Carl-Bosch-Strsaße 38, D-67056 Ludwigshafen) oder aminmodifizierte Acrylate (z.B. Ebecryl P 115, Ebecryl 7100 von Surface Specialitites UCB; Actilane 705, Actilane 715, Actilane 755 von Akzo Nobel Resins bv., Verkaufsbüro Deutschland, Industriestraße 8, D-46446 Emmerich; Laromer PO 94 F, Laromer LR 8869 von BASF; Craynor 503, Craynor 550 von Cray Valley, Immeuble le Diamant B, F-92970 Paris la Defense; Photomer 4775F von Cognis) in Mengen von 1 bis 5 Gew.%, bezogen auf die Gesamtmasse der Glasdruckfarbe oder des Glasdrucklacks, enthalten sein.

Bei den Pigmenten, die in der erfindungsgemäßen Glasdruckfarbe enthalten sind, kann es sich um beliebige Pigmente handeln, z.B. um Titandioxid, Zinksulfid, Pigmentruß, Azodiarylgelb, Isoindolgelb, Diarylidorange, Chinacridonmagenta, Diketopyrrolorot, Kupferphthalocyaninblau, Kupferphthalocyaningrün, Dioxazinviolett und Diketometalloxid. Eine ziemlich umfassende Auflistung weiterer einsetzbarer Pigmente ist im Colour Index International, Fourth Edition Online, 2001, veröffentlicht von der Society of Dyers and Colourists in Verbindung mit der American Association of Textile Chemists and Colorists, zu finden. Es können auch Effektpigmente, wie Metalloxid-beschichtete Glimmer und Metallicpigmente, eingesetzt werden.

Die Menge an Buntpigment beträgt gewöhnlich 2 bis 50 Gew.%, bevorzugt 10 bis 35 Gew.%, bezogen auf die Gesamtmasse der Glasdruckfarbe, abhängig von der Art des Pigments und der gewünschten Deckkraft. Weißpigment wird gewöhnlich in einer Menge von 20 bis 50 Gew.%, bevorzugt 30 bis 40 Gew.%, eingesetzt.

Der Glasdrucklack enthält im allgemeinen kein Pigment.

Im allgemeinen wird der Glasdruckfarbe oder dem Glasdrucklack zusätzlich zu dem UV-härtenden Monomer, in dem das Epoxidharz auf der Basis von Bisphenol A gelöst ist, weiterer Reaktivverdünner zugesetzt. Bei diesen Reaktivverdünnern, die ebenfalls UV-härtend sind, kann es sich um die oben im Zusammenhang mit der Polyesterlösung erörterten UV-härtenden Monomere handeln. Ferner können auch noch weitere Verbindungen mit einer einzigen ethylenisch ungesättigten Bindung verwendet werden, wie beispielsweise N-Vinylpyrrolidon (NVP) und Vinylcaprolactam. Die eingesetzten Mengen an zusätzlichem Reaktivverdünner betragen im allgemeinen 0 bis 60 Gew.%, bevorzugt 3 bis 20 Gew.%, insbesondere 4 bis 8 Gew.%, z.B. 6 bis 7 Gew.%, bezogen auf die Gesamtmasse der Glasdruckfarbe oder des Glasdrucklacks.

Die erfindungsgemäße Glasdruckfarbe und der erfindungsgemäße Glasdrucklack können einen oder mehrere Füllstoffe umfassen. Die Beschaffenheit der Füllstoffe ist nicht besonders kritisch. Sie können aus üblichen in Druckfarben verwendeten Füllstoffen ausgewählt sein, wie beispielsweise, ohne darauf beschränkt zu sein, China Clay, Bariumsulfat (in gefällter Form als blanc fixe), Calciumcarbonat, Zinksulfid, Kieselerde, Talkum, Aluminiumsilicat, Aluminiumhydrat und/oder Kieselsäure. Die Menge an eingesetztem Füllstoff liegt im allgemeinen im Bereich von 0 bis 50 Gew.%, bevorzugt 10 bis 30 Gew.%, z.B. 20 Gew.%, bezogen auf die Gesamtmasse der Glasdruckfarbe oder des Glasdrucklacks.

Auch ein Verdicker kann in der erfindungsgemäßen Glasdruckfarbe oder dem erfindungsgemäßen Glasdrucklack enthalten enthalten sein und ebenfalls aus üblichen für diesen Zweck in Farben/Lacken verwendeten Materialien ausgewählt sein. Dazu zählen ohne Beschränkung darauf z.B. pyrogene Kieselsäure, Schichtsilicate und Rizinusölderivate. Die eingesetzte Menge an Verdicker liegt gewöhnlich im Bereich von 0 bis 10 Gew.%, bevorzugt 1 bis 5 Gew.% und insbesondere 1,5 bis 3 Gew.%, bezogen auf die Gesamtmasse der Glasdruckfarbe, in Abhängigkeit von der Art des Pigments, oder des Glasdrucklacks.

Im allgemeinen enthalten die erfindungsgemäße Glasdruckfarbe und der erfindungsgemäße Glasdrucklack auch einen Entschäumer und/oder ein Verlaufmittel, im allgemeinen in einer Menge von 0,5 bis 2,5 Gew.%, bevorzugt 0,5 bis 1,5 und insbesondere 1 Gew.%, bezogen auf die Gesamtmasse der Glasdruckfarbe oder des Glasdrucklacks. Entschäumer können z.B. aus modifizierten Acrylaten oder modifizierten Acrylatcopolymeren, aber auch, und das bevorzugt, aus silikonhaltigen Verbindungen ausgewählt sein. Verlaufmittel umfassen beispielsweise modifizierte Polyacrylate und Polysiloxane.

Als Stabilisatoren werden bevorzugt Genorad 16 von der Fa. Rahn und Fluorstab UV2 von der Fa. Kromachem, Park Industrial Centre, Tolpits Lane, Watford, Hertfordshire WD1 8SP, UK, verwendet.

Der Glasdruckfarbe und dem Glasdrucklack kann vor dem Verdrucken ein Haftvermittler in einer Menge von 0,1 bis 20 Gew.%, bevorzugt 1 bis 10 Gew.%, bezogen auf die Gesamtmasse der Glasdruckfarbe oder des Glasdrucklacks, zugesetzt werden. Dabei kann es sich um Isocyanat-Haftvermittler handeln, z.B. um aliphatische Polyisocyanate, wie Hexamethylendiisocyanat (HDI), Trimethylhexandiisocyanat (TMHDI), cycloaliphatische Polyisocyanate wie Isophorondiisocyanat (IPDI), hydriertes Xylylendiisocyanat (HXDI) oder Diisocyanatodicyclohexylmethan (HMDI), sowie aromatische Polyiisocyanate, wie Toluylendiisocyanat (TDI), Xylylendiisocyanat (XDI), Tetramethylxylylendiisocyanat (TMXDI) oder Diisocyanatodiphenylmethan (MDI). Kommerziell erhältliche Produkte sind z.B. Desmodur E41 oder Desmodur N 75 (Bayer). Auch Polyimide, wie Polyethylenimide, Polycarbodiimide, können eingesetzt werden. Die bevorzugten Haftvermittler sind jedoch Silan-Haftvermittler, wie Alkylsilane, Vinylsilane, Methacryloxysilane, Epoxysilane, Aminosilane, Harnstoffsilane, Chlorsilane und Isocyanatosilane. Ganz besonders bevorzugt sind Aminosilane, wie *gamma*-Aminopropyltriethoxysilan, *gamma*-Aminopropyltrimethoxysilan, n-*beta*-(Aminoethyl)-*gamma*-aminopropyl-trimethoxysilan, *Bis*(*gamma*-Trimethoxysilylpropyl)amin, *N-*Phenyl-*gamma*-Aminopropyltrimethoxysilan und N-b*beta-*(Aminoethyl)-*gamma*-aminopropylmethyldimethoxysilan, und Isocyanatosilane, wie *gamma*-Isocyanatopropyltriethoxysilan.

Die Gegenstände, die gemäß der Erfindung bedruckt werden können, schließen Glas, Keramik, Fliesen und ähnliche zumindest an der Oberfläche glasartige Gegenstände ein. Demgemäß betrifft die Erfindung auch die Verwendung einer Glasdruckfarbe oder eines Glasdrucklacks zum Bedrucken von Glas-, Keramik-, Fliesen- und ähnlichen zumindest an ihrer Oberfläche glasartigen Substraten.

Derartige Gegenstände können in jeder Form oder Gestalt vorliegen, wie einem Behälter, einer Platte, einer Fliese, einer Figur usw. In einer bevorzugten Ausführungsform der Erfindung ist der Gegenstand ein Verpackungs- (Getränkeflaschen, Kosmetikbehälter) oder ein Wirtschaftsglas.

Der Ausdruck "Glas", wie er gemäß der Erfindung verwendet wird, soll Glas, Keramik, Fliese und ähnlich glasartige Materialien bedeuten.

Vor dem Bedrucken wird das Glas gewöhnlich einer Vorbehandlung unterzogen. Dabei kann es sich um eine Flammenbehandlung handeln.

Eine besonders wirkungsvolle Vorbehandlung ist das sogenannte UVitro-Verfahren der Firma Isimat, Ringelbacherstrasse 38-40, D-73479 Ellwangen. Dieses Verfahren ist in der DE 100 19 926 A1 und in der US 6,513,435 B2 ausführlich erläutert. Es umfaßt in einem ersten Schritt die Behandlung einer Glasoberfläche mit einer oxidierenden Flamme (d.h. mit Sauerstoffüberschuß) gewöhnlich über 3 bis 4 Sekunden und in einem zweiten Schritt die Behandlung mit einer silicatisierenden Flamme (d.h. einer Flamme, der eine Siliciumverbindung, z.B. Tetramethoxysilan, zugeführt wird), gewöhnlich ebenfalls über 3 bis 4 Sekunden.

Anschließend wird das Glas bedruckt. Bei dem Druckverfahren kann es sich beispielsweise um ein Siebdruck-, Tampondruck-, Offsetdruck-, Flexo- oder Tiefdruckverfahren handeln. Bevorzugt ist ein Siebdruckverfahren.

Die Härtung der Glasdruckfarbe oder des Glasdrucklacks wird mit UV-Licht in einem Wellenlängenbereich von 200 bis 400 nm über eine Zeitspanne vorgenommen, die ausreichend ist, um eine vollständige Härtung zu erzielen. Alternativ kann die Glasdruckfarbe oder der Glasdrucklack auch ohne Photoinitiatoren mit Elektronenstrahlen gehärtet werden.

Es kann die ganze Farbtonpalette verdruckt werden. Wenn mit Siebdruck gedruckt wird, wird vorzugsweise ein Siebdruckgewebe 100-40 bis 180-27, bevorzugt 140-34 verwendet, was eine Farbschichtdicke von 5-10 µm zum Ergebnis hat. Die Härtung erfolgt je nach Druckaufgabe und Druckmaschine mit marktüblichen Quecksilber-Mitteldrucklampen bzw. Galliumdotierten Lampen mit 80-400 W/cm, bevorzugt 120 bis 200 W/cm, die im wesenlichen fokussiert sind. Die Belichtungszeit ist mit der Druckgeschwindigkeit gekoppelt, da die Druck- und die Belichtungsvorrichtung gekoppelt sind. Bei Flaschen ist eine übliche Druckgeschwindikeit 40-120 Drucke/min.

Nach der UV-Härtung kann gegebenenfalls ein Nachtemperungsschritt z.B. bei einer Temperatur von 130 bis 200°C, bevorzugt 130 bis 170°C und insbesondere 150°C über eine Zeitspanne von beispielsweise 20 bis 40 min, bevorzugt 30 min, vorgenommen werden.

Die Glasdruckfarbe und der Glasdrucklack haben eine gute Zwischenschichthaftung und können mit Heißprägefolien geprägt werden.

Die folgenden Beispiele erläutern die Erfindung.

### BEISPIELE

### Beispiel 1

Bei einer Glasflasche wurde-eine UVitro-Vorbehandlung vorgenommen (Flammbehandlungsanlage arcogas FTS 401: (Arcogas GmbH, Rotweg 25, D-71297 Mannheim):
Brenner: MB3 100
   1. Vorbeflammen 300 1/min. (Luft) - 11 l/min. (Propan/Butan)
   2. UVitro 200 l/min. (Luft) - 7,5l/min (Propan/Butan)
Dauer: jeweils 3 - 4 Sekunden

Danach werden die Flaschen auf 35° - 40°C abgekühlt.

Mittels Dispergierung auf 3-Walzen- bzw. Perlmühle wurde vorher eine Glasdruckfarbe der folgenden Zusammensetzung hergestellt:

| Komponente | Bezugsquelle | Menge (Gew. %) |
|---|---|---|
| 1,6-Heaxandioldiacrylat | LAROMER* HDDA | 6 |
| Stabilisator | FLORSTAB UV-2** | 1 |
| Polysiloxanentschäumer | Tego Airex 920*** | 0,5 |
| | Tego Rad 2500**** | 0, 5 |
| Photoinitiator 1 | DAROCUR 1173/1173C | 1 |
| Photoinitiator 2 | Lucerin TPO | 4,9 |
| Co-initiator | EBECRYL 7100***** | 4 |
| Pigment | TiO₂ | 27,5 |
| 50%ige Epoxidharzlösung in HDDA | ARALDITE 7072 50%ig in Laromer HDDA | 25 |
| Nanosiliciumdioxid in Melaminacrylat | NANOCRYL XP 21/0793 | 10 |
| 35%ige MMA-Colpolymerlösung in HDDA | PARALOID B60 35% in HDDA | 19,6 |
| | | 100 |

| | | |
|---|---|---|
| * : LAROMER ist eine Marke der Firma BASF **: FLORSTAB UV-2 ist ein Stabilisator der Firma Kromachem *** Tego Airex 920 ist ein Entschäumer der Firma Tego Chemie Service GmbH, Goldschmidtstraße 11. D-45127 Essen **** Tego Rad 2500 ist ein Verlaufmittel der Firma Tego ***** Ebecryl 7100 ist ein Amino-modifiziertes Acrylat der Firma Surface Specialitites UCB | | |

Eine Mischung aus den in der vorstehenden Tabelle angegebenen Komponenten wurde mit 4 Gew.% Diaminosilan (z.B. N-*beta-*(Aminoethyl)-*gamma*-aminopropyltrimethoxysilan oder N-*beta-*(Aminoethyl)-*gamma*-aminopropylmethyldimethoxysilan) oder mit 10 Gew.% *gamma*-Isocyanatopropyltriethoxysilan gemischt und im Siebdruckverfahren auf einer ISIMAT 1000 P-Druckmaschine mit einem Siebgewebe 120 - 34 bei 60 Drucken/min auf die behandelte Glasflasche gedruckt.

Die Verdruckbarkeit ist gut.

Die UV-Härtung fand in einem UV-Trockner bei ca. 600 mJ/cm² statt.

Ein Einbrennen der Farbe wurde nicht vorgenommen.

Es wurde eine sehr gute Haftfestigkeit und Kratzfestigkeit im unverletzten Farbfilm erzielt. Im Spülmaschinentest konnten in einer Winterhalter-Industriespülmaschine über 100 Spülvorgänge ohne Veränderung des Druckbildes vorgenommen werden.

Die bedruckten Flaschen konnten ohne Verletzung des Farbfilms in einer Abfüllinie mit Fruchtsaft befüllt werden.

### Beispiel 2

Auf unbehandeltes Flachglas wird eine Glasfarbe mit der folgenden Zusammensetzung

| Komponente | Handelsname | Menge (Gew.%) |
|---|---|---|
| 1,6-Hexandioldiacrylat | LAROMER* HDDA | 6,6 |
| Polysiloxanentschäumer | Tego Airex 920*** | 0, 5 |
| | Tego Rad 2500**** | 0, 5 |
| Photoinitiator 1 | DAROCUR 1173/1173C | 1 |
| Photoinitiator 2 | Lucerin TPO | 4,9 |
| Co-Initiator | EBECRYL 7100***** | 4 |
| Pigment | TiO₂ | 27,5 |
| 50%ige Epoxidharzlösung in HDDA | ARALDITE 7072 50%ig in LAROMER HDDA | 25 |
| Säuremodofiziertes Polyesteracrylat | GENOMER 7154 | 30 |
| | | 100 |

| | | |
|---|---|---|
| (Fußnoten siehe Beispiel 1) | | |

ohne Verwendung eines Haftvermittlers im Siebdruckverfahren mit einem Siebgewebe 140-34 gedruckt.

Die UV-Härtung wurde mit einer Quecksilbermitteldrucklampe bei 2x120 W/cm² bei etwa 5 m/min vorgenommen.

Es wurde ohne Einbrennen eine gute Gitterschnittfestigkeit (Haftung) erzielt. Die Kratzfestigkeit ist sowohl im unverletzten als auch im verletzten Film sehr gut.

In einem weiteren Versuch wurde die Farbe anschließend 30 min bei 150°C eingebrannt.

Dann erreichte die Druckfarbe für Glas sofort nach dem Schwitzwassertest einen Wert für den Gitterschnitt nach EN ISO 2409 von GT 0.

Mit der Glasdruckfarbe des Beispiels 1 wurden also im Zweikomponentendruck ohne das Erfordernis eines Einbrennens gute Haftungs-, Kratzfestigkeits- und Wasserbeständigkeitseigenschaften der resultierende Farbfilms erzielt. Mit der Glasdruckfarbe 2 konnten im Einkomponentendruck ohne anschließendes Einbrennen ebenfalls gute Haftfestigkeits- und Kratzfestigkeitseigenschaften und mit anschließendem Einbrennen zusätzlich gute Wasserbeständigkeitseigenschaften des resultierenden Farbfilms verwirklicht werden. Dies bedeutet eine Vereinfachung des Druckverfahrens im Vergleich zu den Druckverfahren des Standes der Technik.

## Patentansprüche

1. Glasdruckfarbe oder Glasdrucklack, umfassend mindestens zwei Harze, die zusammen eine photohärtbare Mischung ergeben, und mindestens einen Photoinitiator, **dadurch gekennzeichnet, daß** es sich bei einem der Harze um ein Epoxidharz auf der Basis von Bisphenol A, verdünnt in einem UV-härtenden Monomer, handelt und bei dem mindestens einen anderen Harz um ein Harz handelt, das freie funktionelle Amino-, Hydroxy-, Epoxid-, Säure-, Säureanhydrid- und/oder Acrylatgruppen aufweist.

2. Glasdruckfarbe oder Glasdrucklack nach Anspruch 1,
**dadurch gekennzeichnet, daß** das Epoxidharz auf der Basis von Bisphenol A ein Gewichtsmittel des Molekulargewichts im Bereich von 800 bis 1500 aufweist.

3. Glasdruckfarbe oder Glasdrucklack nach Anspruch 1 oder 2, **dadurch gekennzeichnet, daß** es sich bei dem mindestens einen anderen Harz um ein Melaminacrylat, ein säuremodifiziertes Polyesteracrylat und/oder ein Epoxyacrylat handelt.

4. Glasdruckfarbe oder Glasdrucklack nach einem der Ansprüche 1 bis 3, **dadurch gekennzeichnet, daß** das Epoxidharz in einer Menge von 1 bis 90 Gew.%, bevorzugt 5 bis 20 Gew.% und insbesondere 11 bis 14 Gew.% Trockengewicht, bezogen auf das Gewicht der Glasdruckfarbe oder des Glasdrucklacks, verwendet wird.

5. Glasdruckfarbe oder Glasdrucklack nach einem der Ansprüche 1 bis 4, **dadurch gekennzeichnet, daß** das mindestens eine andere Harz in einer Menge von 5 bis 90 Gew.%, bevorzugt 5 bis 40 Gew.% und insbesondere 10 bis 30 Gew.% Trockengewicht, bezogen auf das Gewicht der Glasdruckfarbe oder des Glasdrucklacks, verwendet wird.

6. Glasdruckfarbe oder Glasdrucklack nach einem der Ansprüche 1 bis 5, **dadurch gekennzeichnet, daß** der oder die Photoinitiatoren in einer Gesamtmenge von 1 bis 12 Gew.%, insbesondere 3 bis 7 Gew.%, bezogen auf, das Gewicht der Glasdruckfarbe oder des Glasdrucklacks, vorliegen.

7. Glasdruckfarbe oder Glasdrucklack nach einem der Ansprüche 1 bis 6 **dadurch gekennzeichnet, daß** das UV-härtende Monomer Hexandioldiacrylat ist.

8. Glasdruckfarbe oder Glasdrucklack nach einem der Ansprüche 1 bis 7, **dadurch gekennzeichnet, daß** sie bzw. er weiter einen von dem UV-härtenden Monomer verschiedenen UV-härtenden Reaktivverdünner enthält.

9. Glasdruckfarbe oder Glasdrucklack nach einem der Ansprüche 1 bis 8, **dadurch gekennzeichnet, daß** sie bzw. er weiter einen Stabilisator enthält.

10. Glasdruckfarbe oder Glasdrucklack nach einem der Ansprüche 1 bis 9, **dadurch gekennzeichnet, daß** sie bzw. er weiter einen Co-Initiator enthält.

11. Glasdruckfarbe nach einem der Ansprüche 1 bis 10,
**dadurch gekennzeichnet, daß** sie ein oder mehrere Pigmente oder Farbstoffe in einer Menge von 0,5 bis 50 Gew.%, bezogen auf das Gesamtgewicht der Farbe, enthält.

12. Verwendung einer Glasdruckfarbe oder eines Glasdrücklacks nach einem der Ansprüche 1 bis 11 zum Bedrucken eines Glas- oder zumindest an seiner Oberfläche glasartigen Substrats.

13. Verwendung nach Anspruch 12, **dadurch gekennzeichnet, daß** das Glas- oder glasartige Substrat aus Glas, Keramik und Fliesen ausgewählt ist.

14. Verfahren zum Bedrucken eines Glas- oder zumindest an seiner Oberfläche glasartigen Substrats mit einer Glasdruckfarbe oder einem Glasdrucklack nach einem der Ansprüche 1 bis 11, umfassend die Schritte:
a) Vorbehandeln des Glas- oder glasartigen Substrats;
b) Bedrucken des Glas- oder glasartigen Substrats mit einer Glasdruckfarbe oder einem Glasdrucklack nach einem der Ansprüche 1 bis 11, wobei vor dem Verdrucken ein Haftvermittler in die Glasdruckfarbe oder den Glasdrucklack eingemischt wird, und
c) Härten der Glasdruckfarbe oder des Glasdrucklacks mit UV-Strahlung;
wobei kein anschließendes Tempern vorgenommen wird.

15. Verfahren zum Bedrucken eines Glas- oder zumindest an seiner Oberfläche glasartigen Substrats mit einer Glasdruckfarbe oder einem Glasdrucklack nach einem der Ansprüche 1 bis 11, umfassend die Schritte:
(a) Bedrucken des Glas- oder glasartigen Substrats mit der Glasdruckfarbe bzw. dem Glasdrucklack ohne Verwendung eines Haftvermittlers;
(c) Härten der Glasdruckfarbe bzw. des Glasdrucklacks mit UV-Strahlung; und gegebenenfalls
(d) Nachtempern des bedruckten Glas- oder glasartigen Substrats bei einer Temperatur von 130°C bis 170°C über 20 bis 40 Minuten.

## Claims

1. Glass printing ink or glass printing lacquer comprising at least two resins, which together produce a photohardenable mixture, and at least one photoinitiator, **characterised in that** one of the resins is a bisphenol A-based epoxy resin, diluted in a UV hardening monomer, and the at least one other resin is a resin which comprises free functional amino, hydroxy, epoxy, acid, acid anhydride and/or acrylate groups.

2. Glass printing ink or glass printing lacquer according to claim 1, **characterised in that** the bisphenol A-based epoxy resin exhibits a weight average molecular weight in the range of 800 to 1500.

3. Glass printing ink or glass printing lacquer according to claim 1 or claim 2, **characterised in that** the at least one other resin is a melamine acrylate, an acid-modified polyester acrylate, and/or an epoxy acrylate.

4. Glass printing ink or glass printing lacquer according to any of claims 1 to 3, **characterised in that** the epoxy resin is used in a quantity of 1 to 90 wt. %, preferably 5 to 20 wt. % and in particular 11 to 14 wt. % dry weight, based on the weight of the glass printing ink or of the glass printing lacquer.

5. Glass printing ink or glass printing lacquer according to any of claims 1 to 4, **characterised in that** the at least one other resin is used in a quantity of 5 to 90 wt. %, preferably 5 to 40 wt. % and in particular 10 to 30 wt. %, based on the weight of the glass printing ink or of the glass printing lacquer.

6. Glass printing ink or glass printing lacquer according to any of claims 1 to 5, **characterised in that** the photoinitiator(s) is/are present in a total quantity of 1 to 12 wt. %, in particular 3 to 7 wt. %, based on the weight of the glass printing ink or of the glass printing lacquer.

7. Glass printing ink or glass printing lacquer according to any of claims 1 to 6, **characterised in that** the UV hardening monomer is hexanediol diacrylate.

8. Glass printing ink or glass printing lacquer according to any of claims 1 to 7, **characterised in that** it further comprises a UV hardening reactive diluent other than the UV hardening monomer.

9. Glass printing ink or glass printing lacquer according to any of claims 1 to 8, **characterised in that** it further comprises a stabiliser.

10. Glass printing ink or glass printing lacquer according to any of claims 1 to 9, **characterised in that** it further comprises a co-initiator.

11. Glass printing ink according to any of claims 1 to 10, **characterised in that** it comprises one or more pigments or dyes in a quantity of 0.5 to 50 wt. %, based on the total weight of the ink.

12. Application of a glass printing ink or glass printing lacquer according to any of claims 1 to 11, for printing a glass substrate or an at least superficially vitreous substrate.

13. Application according to claim 12, **characterised in that** the glass or vitreous substrate is selected from glass, ceramics and tiles.

14. Method for printing a glass substrate or an at least superficially vitreous substrate using a glass printing ink or a glass printing lacquer according to any of claims 1 to 11, comprising the steps of:
a) pretreating the glass or vitreous substrate;
b) printing the glass or vitreous substrate using a glass printing ink or a glass printing lacquer according to any of claims 1 to 11, a coupling agent being mixed into the glass printing ink or the glass printing lacquer before printing, and
c) hardening the glass printing ink or the glass printing lacquer using UV radiation: wherein no subsequent heat treatment is performed.

15. Method for printing a glass substrate or an at least superficially vitreous substrate using a glass printing ink or a glass printing lacquer according to any of claims 1 to 11, comprising the steps of:
a) printing the glass or vitreous substrate with the glass printing ink or the glass printing lacquer without using a coupling agent;
c) hardening the glass printing ink or the glass printing lacquer using UV radiation, and if necessary
d) thermally post-treating the printed glass or vitreous substrate at a temperature of 130 °C to 170 °C for 20 to 40 minutes.

## Revendications

1. Encre d'impression sur verre ou laque d'impression sur verre, comprenant au moins deux résines, qui donnent ensemble un mélange photodurcissable, et au moins un photoamorceur, **caractérisée en ce que** l'une des résines consiste en une résine époxy à base de bisphénol A, diluée dans un monomère durcissant aux UV et ladite au moins une autre résine consiste en une résine qui comporte des groupes amino, hydroxy, époxy, acide, anhydride d'acide et/ou acrylate.

2. Encre d'impression sur verre ou laque d'impression sur verre selon la revendication 1, **caractérisée en ce que** la résine époxy à base de bisphénol A présente une moyenne en poids de la masse moléculaire dans la plage de 800 à 1 500.

3. Encre d'impression sur verre ou laque d'impression sur verre selon la revendication 1 ou 2, **caractérisée en ce que** ladite au moins une autre résine consiste en un acrylate de mélamine, un polyesteracrylate modifié par un acide et/ou un époxyacrylate.

4. Encre d'impression sur verre ou laque d'impression sur verre selon l'une quelconque des revendications 1 à 3, **caractérisée en ce que** la résine époxy est utilisée en une quantité de 1 à 90 % en poids, de préférence de 5 à 20 % en poids et en particulier de 11 à 14% en poids de poids sec, par rapport au poids de l'encre d'impression sur verre ou de la laque d'impression sur verre.

5. Encre d'impression sur verre ou laque d'impression sur verre selon l'une quelconque des revendications 1 à 4, **caractérisée en ce que** ladite au moins une autre résine est utilisée en une quantité de 5 à 90 % en poids, de préférence de 5 à 40 % en poids et en particulier de 10 à 30 % en poids de poids sec, par rapport au poids de l'encre d'impression sur verre ou de la laque d'impression sur verre.

6. Encre d'impression sur verre ou laque d'impression sur verre selon l'une quelconque des revendications 1 à 5, **caractérisée en ce que** le ou les photoamorceurs sont présents en une quantité totale de 1 à 12 % en poids, en particulier de 3 à 7 % en poids, par rapport au poids de l'encre d'impression sur verre ou de la laque d'impression sur verre.

7. Encre d'impression sur verre ou laque d'impression sur verre selon l'une quelconque des revendications 1 à 6, **caractérisée en ce que** le monomère durcissant aux UV est le diacrylate d'hexanediol.

8. Encre d'impression sur verre ou laque d'impression sur verre selon l'une quelconque des revendications 1 à 7, **caractérisée en ce qu'**elle contient en outre un diluant réactif durcissant aux UV, différent du monomère durcissant aux UV.

9. Encre d'impression sur verre ou laque d'impression sur verre selon l'une quelconque des revendications 1 à 8, **caractérisée en ce qu'**elle contient en outre un stabilisant.

10. Encre d'impression sur verre ou laque d'impression sur verre selon l'une quelconque des revendications 1 à 9, **caractérisée en ce qu'**elle contient en outre un co-amorceur.

11. Encre d'impression sur verre selon l'une quelconque des revendications 1 à 10, **caractérisée en ce qu'**elle contient un ou plusieurs pigments ou colorants en une quantité de 0,5 à 50 % en poids, par rapport au poids total de l'encre,

12. Utilisation d'une encre d'impression sur verre ou d'une laque d'impression sur verre selon l'une quelconque des revendications 1 à 11, pour l'impression d'un support en verre ou au moins vitreux à sa surface.

13. Utilisation selon la revendication 12, **caractérisée en ce que** le support en verre ou vitreux est choisi parmi le verre, la céramique et des carreaux.

14. Procédé pour l'impression d'un support en verre ou au moins vitreux à sa surface avec une encre d'impression sur verre ou une laque d'impression sur verre selon l'une quelconque des revendications 1 à 11, comprenant les étapes :
a) prétraitement du support en verre ou vitreux ;
b) impression du support en verre ou vitreux avec une encre d'impression sur verre ou une laque d'impression sur verre selon l'une quelconque des revendications 1 à 11, dans lequel avant l'impression on incorpore un promoteur d'adhérence dans l'encre d'impression sur verre ou la laque d'impression sur verre, et
c) durcissement de l'encre d'impression sur verre ou de la laque d'impression sur verre par irradiation UV :
aucun traitement thermique subséquent n'étant effectué.

15. Procédé pour l'impression d'un support en verre ou au moins vitreux à sa surface avec une encre d'impression sur verre ou une laque d'impression sur verre selon l'une quelconque des revendications 1 à 11, comprenant les étapes :
(a) impression du support en verre ou vitreux avec l'encre d'impression sur verre ou la laque d'impression sur verre, sans utilisation d'un promoteur d'adhérence ;
(c) durcissement de l'encre d'impression ou de la laque d'impression sur verre par irradiation UV ; et éventuellement
(d) post-traitement thermique à une température de 130 °C à 170 °C pendant 20 à 40 minutes du support en verre ou vitreux, imprimé.
